# EUROPEAN PATENT SPECIFICATION

(11) **EP 4 357 202 B1**
(45) Date of publication and mention of the grant of the patent: **23.09.2026**
(21) Application number: 22841219.3
(22) Date of filing: 04.07.2022
(51) Int. Cl.: H04L 12/40

(54) **CONTROL METHOD AND APPARATUS**
STEUERUNGSVERFAHREN UND -VORRICHTUNG
PROCÉDÉ DE COMMANDE ET APPAREIL

(30) Priority: 12.07.2021 CN 202110784352
(43) Date of publication of application: 24.04.2024
(73) Proprietor: Yinwang Intelligent Technologies Co., Ltd., Shenzhen, Guangdong 518129 (CN)
(72) Inventor: MA, Tao, Shenzhen, Guangdong 518129 (CN); CHEN, Yao, Shenzhen, Guangdong 518129 (CN)
(74) Representative: Pfenning, Meinig & Partner mbB
(86) International application number: PCT/CN2022/103756
(87) International publication number: WO 2023/284581

(56) References cited:
- CN-A- 102 497 355
- CN-A- 105 882 598
- US-A1- 2003 070 022
- US-A1- 2007 030 844
- US-A1- 2012 084 482
- US-A1- 2016 055 116
- US-A1- 2018 131 522
- US-A1- 2021 203 682

## Description

### TECHNICAL FIELD

This application relates to the field of the internet of vehicles technologies, and in particular, to a control method and apparatus, and a computer-readable storage medium.

### BACKGROUND

With the continuous development of the automotive industry and with the deepening of electrification, intelligence, networking, and sharing in vehicles, functions of the vehicles are becoming increasingly complex. To implement related functions of an intelligent vehicle, the vehicle is provided with a controller and an electronic control unit (electronic control unit, ECU). The controller may send a control packet to the ECU, and the ECU may control, based on the control packet, an actuator in the vehicle to implement a corresponding function. Currently, communication between the controller and the ECU is mainly implemented by using communication protocols such as a controller area network (controller area network, CAN), a controller area network flexible data-rate (controller area network flexible data-rate, CAN FD), or a local interconnect network (local interconnect network, LIN). These protocols use a fixed-length encoding format. Content of packets transmitted by using these protocols is fixed, and a quantity and sequence of control signals in the packets are fixed.

However, increasingly abundant functions of the vehicle lead to complex control signal combinations in the control packet of the vehicle, and frequent updates of some functions result in frequent changes in the control packet of the vehicle. A seat control function is used as an example. If a control packet is designed by using the foregoing fixed-length encoding format, when only some motors or some functions of a seat need to be controlled, control information of all motors or control information of all functions still needs to be set in the control packet. As a result, the control packet has a large amount of information redundancy, resulting in a waste of transmission bandwidth and low transmission efficiency. In addition, once a function of the vehicle is updated, a large quantity of control signals in the control packet need to be modified. Therefore, the foregoing fixed-length encoding format is not applicable to a design for control packets of a vehicle with complex functions or frequent function upgrade requirements.

Therefore, how to flexibly design the control packet of the vehicle and reduce information redundancy in the control packet to reduce communication resource overheads and improve transmission efficiency of the control packet of the vehicle is an urgent problem to be resolved.

US 2003/070 022 A1 describes a communication control apparatus for performing an arbitration when a collision of frames occurs on a bus has a plurality of message boxes.

### SUMMARY

This application provides a control methods, a controller and a computer-readable storage medium according to the independent claims, to reduce information redundancy in a control packet of a vehicle when a plurality of functions or a plurality of actuators of the vehicle are controlled. Particular embodiments are defined in the dependent claims.

According to a first aspect, an embodiment of this application provides a control method. The method is applied to a controller in a vehicle. The vehicle includes the controller and an electronic control unit, and the method includes: The controller generates a packet, and sends the packet to the electronic control unit. The packet includes a plurality of bits and control information. The plurality of bits indicate whether the electronic control unit controls a plurality of objects based on the control information. The plurality of bits are in a one-to-one correspondence with the plurality of objects.

The packet comprises a length field used to identify a bit length of the packet, a control information field comprising a plurality of pieces of control information, a function identifier field, and an actuator identifier field. The plurality of objects are actuators, the function identifier field corresponds to an identifier of a first function, each bit of the plurality of bits is used to identify one actuator, and each piece of control information corresponds to an actuator identified by a valid bit. Or, the plurality of objects are functions, each bit of the plurality of bits is used to identify one function, the actuator identifier field corresponds to an identifier of a first actuator, and each piece of control information corresponds to a function identified by a valid bit. In this embodiment of this application, the controller sets, in the packet, the plurality of bits indicating whether the electronic control unit controls the plurality of objects based on the control information, and associates the plurality of bits with the plurality of objects in a one-to-one correspondence, so that the plurality of objects of the vehicle can be controlled, thereby effectively reducing information redundancy in the control packet of the vehicle, effectively reducing communication resource overheads, and effectively improving transmission efficiency of the control packet of the vehicle.

In a possible design, the plurality of bits include at least one valid bit. The at least one valid bit indicates the electronic control unit to control at least one first object in the plurality of objects based on the control information. The at least one valid bit is in a one-to-one correspondence with the at least one first object.

In this design, the at least one valid bit is designed in the plurality of bits in the control packet of the vehicle, so as to indicate the electronic control unit to control, according to a user requirement, the at least one first object that the user wants to control.

In a possible design, the plurality of bits include at least one invalid bit. The at least one invalid bit indicates the electronic control unit not to control at least one second object in the plurality of objects based on the control information, and the at least one invalid bit is in a one-to-one correspondence with the at least one second object.

In this design, the at least one invalid bit is designed in the plurality of bits in the control packet of the vehicle, so as to indicate the electronic control unit not to control the at least one second object corresponding to the at least one invalid bit.

In a possible design, the packet further includes a synchronization bit. In this case, the control information is one piece of control information. The synchronization bit indicates the electronic control unit to control the plurality of objects based on the one piece of control information.

In a possible design, the packet further includes information indicating the plurality of objects.

In this design, the information indicating the objects is set in the control packet of the vehicle, and encoding of an object identifier field is reduced, thereby effectively reducing information redundancy in the packet.

In a possible design, the controller may determine, based on a user input, the plurality of objects and the control information used to control the plurality of objects.

In this design, the controller may determine, based on the user input, the plurality of objects that need to be controlled and the control information, so that the controller may generate a corresponding control packet according to a user requirement.

In a possible design, the controller includes at least one of the following: a vehicle body domain controller, a cockpit domain controller, an intelligent driving domain controller, and a vehicle control domain controller. Certainly, the controller may alternatively be a vehicle controller. This is not specifically limited in this embodiment of this application.

In a possible design, the actuator includes at least one of the following: a door, a window, a light, a chassis actuator, an energy system component, and a sensor. It should be understood that, in this embodiment of this application, the actuator may further include another vehicle component or another vehicle-mounted device. This is not specifically limited in this embodiment of this application.

In a possible design, the function includes at least one of the following: a vehicle-mounted device control function, a vehicle body component control function, a charging control function, and a sensor control function. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle). It should be understood that the function in this embodiment of this application may further include another vehicle function. This is not specifically limited in this embodiment of this application.

According to a second aspect, an embodiment of this application further provides a control method. The method is applied to an electronic control unit in a vehicle. The vehicle includes a controller and the electronic control unit, and the method includes: The electronic control unit receives a packet, where the packet includes a plurality of bits and control information, the plurality of bits indicate whether the electronic control unit controls a plurality of objects based on the control information, and the plurality of bits are in a one-to-one correspondence with the plurality of objects; and the electronic control unit controls the plurality of objects based on the packet.

The packet comprises a length field used to identify a bit length of the packet, a control information field comprising a plurality of pieces of control information, a function identifier field, and an actuator identifier field. The plurality of objects are actuators, the function identifier field corresponds to an identifier of a first function, each bit of the plurality of bits is used to identify one actuator, and each piece of control information corresponds to an actuator identified by a valid bit. Or, the plurality of objects are functions, each bit of the plurality of bits is used to identify one function, the actuator identifier field corresponds to an identifier of a first actuator, and each piece of control information corresponds to a function identified by a valid bit..

In a possible design, the plurality of bits include at least one valid bit. The at least one valid bit indicates the electronic control unit to control at least one first object in the plurality of objects based on the control information. The at least one valid bit is in a one-to-one correspondence with the at least one first object. That electronic control unit controls the plurality of objects based on the packet includes: The electronic control unit controls the at least one first object based on the control information.

In a possible design, the plurality of bits include at least one invalid bit. The at least one invalid bit indicates the electronic control unit not to control at least one second object in the plurality of objects based on the control information, and the at least one invalid bit is in a one-to-one correspondence with the at least one second object.

In a possible design, the packet further includes a synchronization bit. The control information is one piece of control information. The synchronization bit indicates the electronic control unit to control the plurality of objects based on the one piece of control information. That electronic control unit controls the plurality of objects based on the packet includes: The electronic control unit controls the plurality of objects based on the one piece of control information.

In a possible design, the packet further includes information indicating the plurality of objects.

In a possible design, the controller includes at least one of the following: a vehicle body domain controller, a cockpit domain controller, an intelligent driving domain controller, and a vehicle control domain controller. Certainly, the controller may alternatively be a vehicle controller. This is not specifically limited in this embodiment of this application.

In a possible design, the actuator includes at least one of the following: a window, a light, a chassis actuator, an energy system component, and a sensor.

In a possible design, the function includes at least one of the following: a vehicle-mounted device control function, a vehicle body component control function, a charging control function, and a sensor control function. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle). It should be understood that the function in this embodiment of this application may further include another vehicle function. This is not specifically limited in this embodiment of this application.

According to a third aspect, an embodiment of this application provides a control apparatus. The control apparatus is configured to perform the steps in the method according to the first aspect or the possible designs of the first aspect.

As an example, the apparatus includes:
a processing module, configured to generate a packet, where the packet includes a plurality of bits and control information, the plurality of bits indicate whether an electronic control unit in a vehicle controls a plurality of objects based on the control information, the plurality of bits are in a one-to-one correspondence with the plurality of objects, and the object is an actuator or a function; and
a transceiver module, configured to send the packet to the electronic control unit.

In a possible design, the plurality of bits include at least one valid bit. The at least one valid bit indicates the electronic control unit to control at least one first object in the plurality of objects based on the control information. The at least one valid bit is in a one-to-one correspondence with the at least one first object.

In a possible design, the plurality of bits include at least one invalid bit. The at least one invalid bit indicates the electronic control unit not to control at least one second object in the plurality of objects based on the control information, and the at least one invalid bit is in a one-to-one correspondence with the at least one second object.

In a possible design, the packet further includes a synchronization bit. The control information is one piece of control information. The synchronization bit indicates the electronic control unit to control the plurality of objects based on the one piece of control information.

In a possible design, the packet further includes information indicating the plurality of objects.

In a possible design, the processing module is further configured to determine, based on a user input, the plurality of objects and the control information used to control the plurality of objects.

In a possible design, the actuator includes at least one of the following: a door, a window, a light, a chassis actuator, an energy system component, and a sensor. It should be understood that, in this embodiment of this application, the actuator may further include another vehicle component or another vehicle-mounted device. This is not specifically limited in this embodiment of this application.

In a possible design, the function includes at least one of the following: a vehicle-mounted device control function, a vehicle body component control function, a charging control function, and a sensor control function. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle). It should be understood that the actuator in this embodiment of this application may further include another vehicle function. This is not specifically limited in this embodiment of this application.

In a possible design, the apparatus may be a chip or an integrated circuit.

In a possible design, the apparatus includes a memory and a processor. The memory is configured to store a program executed by the processor. When the program is executed by the processor, the apparatus may perform the method in any one of the first aspect or the possible designs of the first aspect.

In a possible design, the apparatus may be a controller in the vehicle. The controller may include at least one of the following: a vehicle body domain controller, a cockpit domain controller, an intelligent driving domain controller, and a vehicle control domain controller. Certainly, the controller may alternatively be a vehicle controller. This is not specifically limited in this embodiment of this application.

According to a fourth aspect, an embodiment of this application provides another control apparatus. The control apparatus is configured to perform the steps in the method according to the second aspect or the possible designs of the second aspect.

As an example, the apparatus includes:
a transceiver module, configured to receive a packet from a controller in a vehicle, where the packet includes a plurality of bits and control information, the plurality of bits indicate whether an electronic control unit in the vehicle controls a plurality of objects based on the control information, the plurality of bits are in a one-to-one correspondence with the plurality of objects, and the object is an actuator or a function; and
a processing module, configured to control the plurality of objects based on the packet.

In a possible design, the plurality of bits include at least one valid bit. The at least one valid bit indicates the electronic control unit to control at least one first object in the plurality of objects based on the control information. The at least one valid bit is in a one-to-one correspondence with the at least one first object. When configured to control the plurality of objects based on the packet, the processing module is specifically configured to: control the at least one first object based on the control information.

In a possible design, the plurality of bits include at least one invalid bit. The at least one invalid bit indicates the electronic control unit not to control at least one second object in the plurality of objects based on the control information, and the at least one invalid bit is in a one-to-one correspondence with the at least one second object.

In a possible design, the packet further includes a synchronization bit. The control information is one piece of control information. The synchronization bit indicates the electronic control unit to control the plurality of objects based on the one piece of control information. When configured to control the plurality of objects based on the packet, the processing module is specifically configured to: control the plurality of objects based on the one piece of control information.

In a possible design, the packet further includes information indicating the plurality of objects.

In a possible design, the controller includes at least one of the following: a vehicle body domain controller, a cockpit domain controller, an intelligent driving domain controller, and a vehicle control domain controller.

In a possible design, the actuator includes at least one of the following: a window, a light, a chassis actuator, an energy system component, and a sensor.

In a possible design, the function includes at least one of the following: a vehicle-mounted device control function, a vehicle body component control function, a charging control function, and a sensor control function. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle).

In a possible design, the apparatus may be a chip or an integrated circuit.

In a possible design, the apparatus includes a memory and a processor. The memory is configured to store a program executed by the processor. When the program is executed by the processor, the apparatus may perform the method in any one of the second aspect or the possible designs of the second aspect.

In a possible design, the apparatus may be the electronic control unit in the vehicle.

According to a fifth aspect, an embodiment of this application provides a control system. As an example, the system includes the control apparatus according to the third aspect and the control apparatus according to the fourth aspect.

According to a sixth aspect, an embodiment of this application provides a vehicle. The vehicle includes:
a controller, configured to perform the control method according to any one of the first aspect or the possible designs of the first aspect; and
an electronic control unit, configured to perform the control method according to any one of the second aspect or the possible designs of the second aspect.

It should be understood that there may be one or more controllers and electronic control units. This is not specifically limited in this embodiment of this application.

According to a seventh aspect, an embodiment of this application provides a computer-readable storage medium. The computer-readable storage medium includes a computer program. When the computer program is read and executed by one or more processors, the control method according to any one of the first aspect or the possible designs of the first aspect and the control method according to any one of the second aspect or the possible designs of the second aspect are implemented.

For beneficial effects of the second aspect to the seventh aspect, specifically refer to technical effects that can be achieved by corresponding designs in the first aspect. Details are not described herein again.

### BRIEF DESCRIPTION OF DRAWINGS

FIG. 1 is a schematic diagram of an architecture to which an embodiment of this application is applicable;
FIG. 2 is a schematic diagram of a scenario to which an embodiment of this application is applicable;
FIG. 3 is a schematic flowchart of a control method according to an embodiment of this application;
FIG. 4A is a schematic diagram 1 of a packet according to an embodiment of this application;
FIG. 4B is a schematic diagram 2 of a packet according to an embodiment of this application;
FIG. 5A is a schematic diagram of a specific packet according to an embodiment of this application;
FIG. 5B is a schematic diagram of another specific packet according to an embodiment of this application;
FIG. 6A is a schematic diagram 3 of a packet according to an embodiment of this application;
FIG. 6B is a schematic diagram of another specific packet according to an embodiment of this application;
FIG. 6C is a schematic diagram 4 of a packet according to an embodiment of this application;
FIG. 6D is a schematic diagram of another specific packet according to an embodiment of this application;
FIG. 6E is a schematic diagram of another specific packet according to an embodiment of this application;
FIG. 7 is a schematic diagram of a structure of a control apparatus according to an embodiment of this application; and
FIG. 8 is a schematic diagram of a structure of another control apparatus according to an embodiment of this application.

### DESCRIPTION OF EMBODIMENTS

To make the objectives, technical solutions, and advantages of embodiments of this application clearer, the following further describes the embodiments of this application with reference to the accompanying drawings.

In the following, some terms in the embodiments of this application are described and explained, to facilitate understanding by a person skilled in the art.
(1) An object may be understood as an actuator of a vehicle or a function associated with a vehicle. The actuator may include a chassis actuator, a window, a door, a light, a sensor, or the like. A function may include a vehicle-mounted device control function, a vehicle body component control function, a charging control function, a sensor control function, or the like. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle).
(2) Control information may be understood as information that is in a control packet of a vehicle and that is used to control an object of the vehicle, and is also referred to as a control signal.
(3) In the embodiments of this application, "at least one" means one or more, and "at least two" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items" or a similar expression thereof refers to any combination of these items, including any combination of a single item or a plurality of items. For example, at least one of a, b, and c may represent a, b, c, a and b, a and c, b and c, or a, b, and c, where a, b, and c may be singular or plural.
(4) Modifiers such as "first" and "second" mentioned in the embodiments of this application are used to distinguish between a plurality of pieces of modified content, and are not intended to limit a size, a shape, content, a sequence, a time sequence, a priority, a quantity, an importance degree, or the like of the plurality of pieces of modified content. For example, first information and second information are merely used to distinguish between different information, but do not indicate different priorities, importance degrees, or the like of the information. In addition, the term "example" is used to represent a particular embodiment.

An embodiment of this application provides a control method. The method may be applied to a controller in a vehicle. The controller may generate a packet, and send the packet to an electronic control unit. The packet includes a plurality of bits and control information. The plurality of bits indicate whether the electronic control unit in the vehicle controls a plurality of objects (actuators or functions) based on the control information. The plurality of bits are in a one-to-one correspondence with the plurality of objects. In this way, the electronic control unit can control the plurality of objects based on the control information. In this way, information redundancy in the control packet of the vehicle can be effectively reduced, thereby effectively reducing communication resource overheads and effectively improving transmission efficiency of the control packet of the vehicle.

Before the control method provided in this embodiment of this application is described, a system architecture to which this embodiment of this application is applicable is first described in detail.

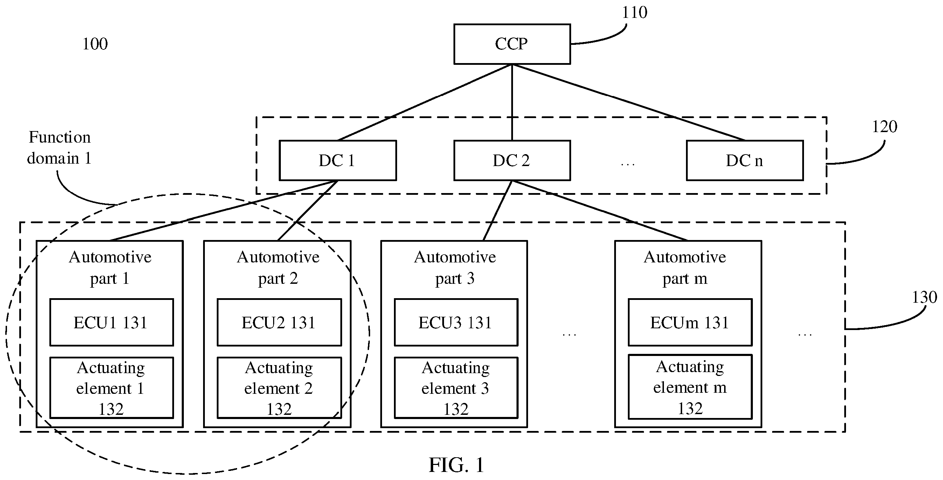

FIG. 1 is a schematic diagram of a conventional system architecture for implementing an electronic control function in a vehicle. The system 100 shown in FIG. 1 includes a controller area network calibration protocol (CAN calibration protocol, CCP) 110, n domain controllers (domain controller, DC) 120, and m automotive parts 130, where n and m are positive integers.

The CCP 110 is in communication connection with the n DCs, and may receive data sent by the DCs, or send control information to the DCs. The CCP 110 may be understood as a general platform for automotive electronic control and information processing. Distributed computing and control systems (for example, ECUs or DCs) in the vehicle are optimized and integrated to implement network-based and integrated control and management of functional modules of automotive computing, control, and communication, and maximize real-time sharing of software and hardware resources, such as automotive computing and control.

Each DC 120 is configured to manage a function domain in the vehicle. In other words, the DC is in communication connection with a plurality of automotive parts located in the function domain. The DC 120 is configured to control an automotive part in a corresponding function domain, or provide a data processing function for an automotive part in a corresponding function domain.

Function domains are usually classified based on functions of automotive parts in the vehicle, and each function domain has an independent domain controller, namely, a DC. Generally, the DC in the vehicle may include an autonomous driving domain controller, a cockpit domain controller (cockpit domain controller, CDC), a vehicle domain controller (vehicle domain controller, VDC), and the like.

The autonomous driving domain controller is configured to provide a service for automotive parts in an intelligent driving domain. The automotive parts in the intelligent driving domain include a monocular camera, a binocular camera, a millimeter-wave radar, a lidar, an ultrasonic radar, and the like. It should be noted that a function of the foregoing autonomous driving domain controller may be implemented by a mobile data center (mobile data center, MDC).

The CDC is configured to provide a service for automotive parts in a cockpit domain. The automotive parts in the cockpit domain include a head-up display, an instrument display, a radio, navigation, a surround-view camera, and the like.

The VDC is configured to provide a service for automotive parts in a vehicle body domain and automotive parts in a chassis domain. The automotive parts in the vehicle body domain include a door/window lifting controller, an electric rearview mirror, an air conditioner, a central door lock, and the like. The automotive parts in the chassis domain include an automotive part in a braking system, an automotive part in a steering system, a throttle, and the like.

The automotive part 130 may specifically include an ECU 131 and an actuating element 132. For example, the automotive part 130 may be a sensor or an actuator in the vehicle.

The ECU 131 is located in the automotive part 130, and is configured to provide an electronic control function for the automotive part 130. For example, the ECU 131 is an electronic control unit in a wiper, an electronic control unit located in a door, and the like.

In a possible implementation, the DC 120 may be configured to generate a packet, and send the packet to the ECU 131 in the automotive part 130. The packet includes a plurality of bits and control information. The plurality of bits may indicate whether the ECU 131 controls a plurality of objects (for example, actuators or functions) based on the control information. The plurality of bits are in a one-to-one correspondence with the plurality of objects. In this way, the ECU associated with the plurality of objects can control the plurality of objects based on the control information. In this way, the plurality of objects of the vehicle can be controlled, information redundancy in the control packet of the vehicle can be effectively reduced, and transmission efficiency of the control packet of the vehicle can be effectively improved.

It should be understood that the "object" may be an actuator or a function. The actuator may be understood as a window, a light, a chassis actuator, an energy system component, a sensor, and the like. The energy system component may include an on-board charger (on-board charger, OBC), a motor control unit (motor control unit, MCU), and the like. The sensor may include a millimeter-wave radar, a lidar, a camera, and the like. The function may be understood as a vehicle-mounted device control function, a vehicle body component control function, a charging control function, a sensor control function, and the like. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle).

It should be noted that the electronic control unit in this embodiment of this application may be an electronic control unit inside a plurality of automotive parts in an engine system, or may be a centralized controller located outside a plurality of automotive parts in an engine system and configured to control the plurality of automotive parts in the engine system. This is not specifically limited herein.

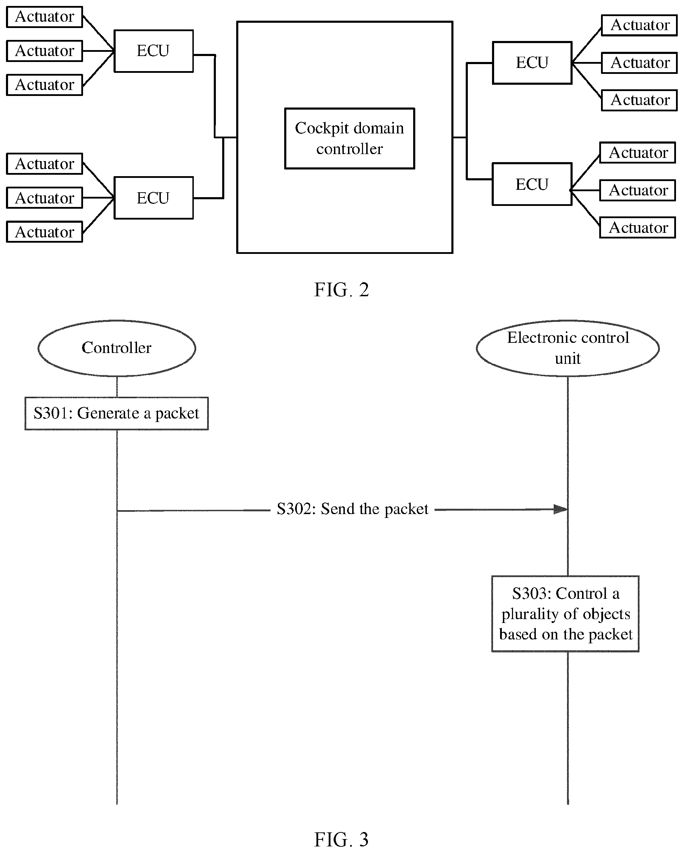

For example, FIG. 2 is a schematic diagram of a scenario to which an embodiment of this application is applicable. In FIG. 2, a cockpit domain controller is used as an example of a DC. The cockpit domain controller is connected to a plurality of ECUs, and each ECU may be configured to control a plurality of actuators.

The cockpit domain controller may generate a packet, and send the packet to the ECU. The packet includes a plurality of bits and control information. The plurality of bits indicate whether the ECU controls a plurality of objects based on the control information. The plurality of bits are in a one-to-one correspondence with the plurality of objects, and the object is an actuator or a function. In this way, the electronic control unit can control the plurality of objects based on the control information.

The ECU may receive a packet, and control the plurality of objects based on the control information. It should be understood that the object in this embodiment of this application may be an actuator or a function, and the actuator may be understood as a window, a light, a chassis actuator, an energy system component, and a sensor. The energy system component includes an on-board charger (on-board charger, OBC), a motor control unit (motor control unit, MCU), and the like. The sensor may include a millimeter-wave radar, a lidar, a camera, and the like. The function may be understood as a vehicle-mounted device control function, a vehicle body component control function, a charging control function, a sensor control function, and the like. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle).

Network architectures and service scenarios described in the embodiments of this application are intended to more clearly describe the technical solutions in the embodiments of this application, but are not intended to limit the technical solutions provided in the embodiments of this application. A person of ordinary skill in the art may know that as the network architectures evolve and a new service scenario emerges, the technical solutions provided in the embodiments of this application are also applicable to a similar technical problem.

The foregoing describes a scenario and an architecture to which an embodiment of this application is applicable. The following describes in detail a control method provided in an embodiment of this application with reference to the accompanying drawings.

FIG. 3 is a schematic flowchart of a control method according to an embodiment of this application. The method may be applied to a scenario shown in FIG. 2, and the method includes the following steps.

S301: A controller generates a packet.

The packet includes a plurality of bits and control information, the plurality of bits may indicate whether an electronic control unit associated with the controller controls a plurality of objects based on the control information, and the plurality of bits are in a one-to-one correspondence with the plurality of obj ects. For example, if the packet needs to control 16 objects, the packet includes 16 bits.

It should be understood that in this embodiment of this application, the controller may be any one of a vehicle body domain controller, a cockpit domain controller, an intelligent driving domain controller, a vehicle control domain controller, and a vehicle controller. This is not specifically limited in this embodiment of this application. In this embodiment of this application, the "object" may be an actuator or a function. The actuator may be understood as a window, a light, a chassis actuator, an energy system component, and a sensor. The energy system component includes an on-board charger (on-board charger, OBC), a motor control unit (motor control unit, MCU), and the like. The sensor may include a millimeter-wave radar, a lidar, a camera, and the like. The function may be understood as a vehicle-mounted device control function, a vehicle body component control function, a charging control function, a sensor control function, and the like. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle). It should be noted that the plurality of bits in the packet may include a valid bit and/or an invalid bit. For example, the valid bit may be represented by "1", and the invalid bit may be represented by "0". The valid bit indicates the electronic control unit to control a first object in the plurality of objects based on the control information, and the invalid bit indicates the electronic control unit not to control a second object in the plurality of objects based on the control information. It should be understood that there may be one or more valid bits, and one valid bit corresponds to one first object; and there may be zero, or one or more invalid bits, and one invalid bit corresponds to one second object. The following provides detailed descriptions in different cases.

Case 1: The plurality of bits in the packet include only the valid bit.

For example, as shown in Table 1, the valid bit is represented by "1", and Table 1 includes only 16 valid bits. In this case, the electronic control unit may control 16 first objects indicated by the 16 bits.

**Table 1**

| | | | | | | | | | | | | | | | |
|---|---|---|---|---|---|---|---|---|---|---|---|---|---|---|---|
| 1 | 1 | 1 | 1 | 1 | 1 | 1 | 1 | 1 | 1 | 1 | 1 | 1 | 1 | 1 | 1 |

Case 2: The plurality of bits in the packet include the valid bit and the invalid bit.

For example, as shown in Table 2, the valid bit is represented by "1", the invalid bit is represented by "0", and Table 2 includes 14 valid bits and two invalid bits. In this case, the electronic control unit may control 14 first objects indicated by the 14 bits, but does not control second objects indicated by the two invalid bits.

**Table 2**

| | | | | | | | | | | | | | | | |
|---|---|---|---|---|---|---|---|---|---|---|---|---|---|---|---|
| 1 | 1 | 1 | 1 | 1 | 1 | 0 | 1 | 1 | 1 | 0 | 1 | 1 | 1 | 1 | 1 |

For another example, as shown in Table 3, the valid bit is represented by "1", the invalid bit is represented by "0", and Table 3 includes 15 valid bits and one invalid bit. In this case, the electronic control unit may control 14 first objects indicated by the 15 bits, but does not control a second object indicated by the one invalid bit.

**Table 3**

| | | | | | | | | | | | | | | | |
|---|---|---|---|---|---|---|---|---|---|---|---|---|---|---|---|
| 1 | 1 | 1 | 1 | 1 | 1 | 1 | 1 | 1 | 1 | 0 | 1 | 1 | 1 | 1 | 1 |

In this way, the valid bit and the invalid bit are set in the plurality of valid bits of the packet, so that the electronic control unit can control a related object (namely, a function or an actuator) of the vehicle according to a user requirement, thereby effectively meeting the user requirement and reducing information redundancy in the packet.

In a possible implementation, the packet further includes information indicating the plurality of objects. When the object is the actuator and when the object is a function, the information indicating the plurality of objects is different. The following provides detailed descriptions for a specific case.

Case 1: When the object controlled by the packet is an actuator, the information indicating the plurality of objects may include identifiers of a plurality of actuators and an identifier of a first function. As shown in Table 4, a door opening function is used as an example of the first function, and the packet may include an identifier of the door opening function and number identifiers of a plurality of doors.

**Table 4**

| Identifier of a first function | Identifier of an actuator |
|---|---|
| Identifier of a door opening function | Identifier of a number 1 door, identifier of a number 2 door, and identifier of a number 3 door |

Case 2: When the object controlled by the packet is a function, the information indicating the plurality of objects may include identifiers of a plurality of functions and an identifier of a first actuator. As shown in Table 5, a number 1 seat is used as an example of the first actuator, and the packet may include a number identifier of the number 1 seat, an identifier of a heating function, an identifier of a cooling function, and an identifier of an adjustment function.

**Table 5**

| Identifier of a first actuator | Identifier of a function |
|---|---|
| Number identifier of a number 1 seat | Identifier of a heating function, identifier of a cooling function, and identifier of an adjustment function |

It should be noted that the controller generates the packet in a plurality of manners, including but not limited to the following manners.

Manner 1: The controller may determine the plurality of objects and the control information based on a user input, and generate a packet based on identifier information and control information of the plurality of objects. The user input may be a voice command, a key operation, a text command, or the like. This is not specifically limited in this embodiment of this application.

In a possible implementation, the controller may obtain the user input by using a man-machine interaction system in the vehicle. The man-machine interaction system may be configured to provide an audio and video manner for the vehicle to interact with the user, obtain the user input, and transfer the user input to the controller.

For example, the user input obtained by the man-machine interaction system is a voice command "Heat up all seats", and the voice command is transferred to the controller. In this case, the controller determines, according to the voice command, that objects that need to be controlled are heating devices of all the seats in the vehicle, and control information corresponding to the objects is, for example, a target temperature to be heated to by the heating devices.

For another example, the user input obtained by the man-machine interaction system is a voice command "Adjust a backrest of a front passenger seat backwards", and the voice command is transferred to the controller. In this case, the controller determines, according to the voice command, that an object that needs to be controlled is a number 1 motor in two motors of the front passenger seat, and control information corresponding to the object is, for example, a target rotational speed of the number 1 motor.

In Manner 1, the controller may generate a control packet of the vehicle based on the user input. In this way, control of a related object in the vehicle better meets the user requirement.

Manner 2: The controller may obtain vehicle usage information of a vehicle user, and automatically generate a packet based on the vehicle usage information of the user.

For example, the controller analyzes the vehicle usage information of the vehicle user, and finds that when the user starts to use the vehicle, the user often turns on a vehicle-mounted speaker to play music. In this case, next time the controller detects that the user starts to use the vehicle, the controller automatically generates a packet used to control the vehicle-mounted speaker to turn on.

For another example, the controller analyzes the vehicle usage information of the vehicle user, and finds that the user does not use the vehicle in a time period from 2 o'clock to 4 o'clock in the afternoon. In this case, the controller automatically generates, in the time period, a packet used to control the vehicle to implement a charging function.

In Manner 2, the controller automatically generates a control packet of the vehicle by analyzing the vehicle usage information of the user. In this way, intelligent control of the vehicle is effectively implemented, and an intelligence degree of the vehicle is improved, thereby effectively improving user experience.

S302. The controller sends the packet to the electronic control unit, and the electronic control unit receives the packet.

In a possible implementation, the controller may transmit the packet in a short-range wireless communication manner (for example, green tooth), or may transmit the packet in an Ethernet bus manner. This is not specifically limited in this application.

S303: The electronic control unit controls the plurality of objects based on the packet.

Case 1: When the object is an actuator, that the electronic control unit controls the plurality of objects may be understood as controlling a plurality of actuators to implement the first function.

For example, the actuator is a seat, the first function is a seat adjustment function, and the electronic control unit may control, based on the packet, all or some of the seats to perform adjustment.

For another example, the actuator is a window or a light, the first function is an enabling/activation function, and the electronic control unit may control, based on the packet, the window of the vehicle to be opened and the light of the vehicle to be turned on.

For another example, the actuator is a sensor, the first function is an information collection function, and the electronic control unit may control, based on the packet, a plurality of sensors to collect information.

Case 2: When the object is a function, that the electronic control unit controls the plurality of objects may be understood as controlling a plurality of functions of the first actuator.

For example, the first actuator is the number 1 seat, the function is a function such as heating, adjusting, and opening, and the electronic control unit may control, based on the packet, the number 1 seat to implement one or more of the functions such as heating, adjusting, and opening.

For another example, the first actuator is the number 1 motor, the function is a function such as adjusting a direction and adjusting a speed, and the electronic control unit may control, based on the packet, the motor 1 to implement adjusting the direction, adjusting the speed, and the like.

The following describes a structure of the packet provided in this embodiment of this application with reference to specific accompanying drawings.

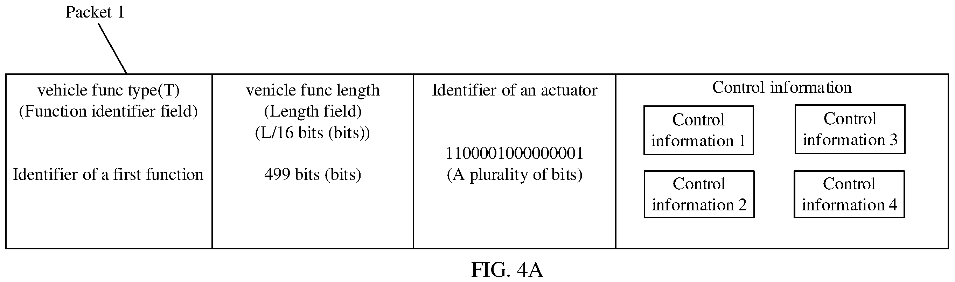

For example, with reference to FIG. 4A, when the object controlled by the packet is an actuator, the packet may be a packet 1 shown in FIG. 4A, and the packet 1 includes a function identifier field (vehicle func type(T)), a length field (venicle func length(L/16 bits)), an actuator identifier field, and a control information field.

The function identifier field corresponds to the identifier of the first function, and is used to identify the first function controlled by the packet 1.

The length field corresponds to a length of the packet 1, and is used to identify a bit length of the packet 1.

The actuator identifier field corresponds to a plurality of bits, and each bit is used to identify one actuator.

Still with reference to FIG. 4A, 16 bits are used as an example of the plurality of bits of the packet 1 in FIG. 4A. The 16 bits are set in the actuator identifier field, and the 16 bits include four valid bits and 12 invalid bits. In this case, the packet 1 may be used to control four actuators to implement the first function.

The control information field corresponds to a plurality of pieces of control information, and each piece of control information corresponds to an actuator identified by a valid bit, and is used to control the actuator identified by the valid bit. FIG. 4A includes four valid bits, and therefore, the packet 1 includes four pieces of control information. For example, when the actuator is the number 1 door, the number 2 door, a number 1 window, and a number 2 window, the packet 1 may include control information 1 used to control opening of the number 1 door, control information 2 used to control opening of the number 2 door, control information 3 used to control opening of the number 1 window, and control information 4 used to control opening of the number 2 window.

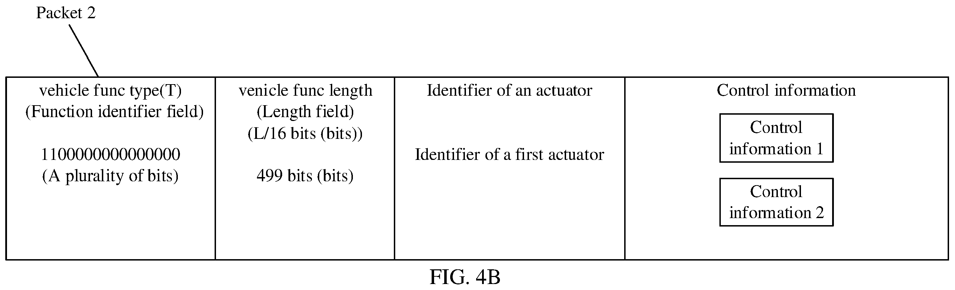

For example, with reference to FIG. 4B, when the object controlled by the packet is a function, the packet may be a packet 2 shown in FIG. 4B, and the packet 2 includes a function identifier field (vehicle func type(T)), a length field (venicle func length(L/16 bits)), an actuator identifier field, and a control information field.

The function identifier field corresponds to a plurality of bits, and each bit is used to identify one function.

Still with reference to FIG. 4B, 16 bits are used as an example of the plurality of bits of the packet 2 in FIG. 4B. The 16 bits are set in the function identifier field, and the 16 bits include two valid bits and 14 invalid bits. In this case, the packet 2 may be used to control two functions of the first actuator.

The length field corresponds to a length of the packet 2, and is used to identify a bit length of the packet 2.

The actuator identifier field corresponds to the identifier of the first actuator, and is used to identify the first actuator controlled by the packet 2.

The control information field corresponds to a plurality of pieces of control information, and each piece of control information corresponds to a function identified by a valid bit, and is used to control the function identified by the valid bit. FIG. 4B includes two valid bits, and therefore, the packet 2 may correspond to two pieces of control information. For example, the number 1 seat is used as an example of the first actuator, and the packet 2 may include control information 1 used to control an adjustment function of the number 1 seat and control information 2 used to control a heating function of the number 1 seat.

For ease of understanding, the following describes the packet provided in this embodiment of this application with reference to a specific example.

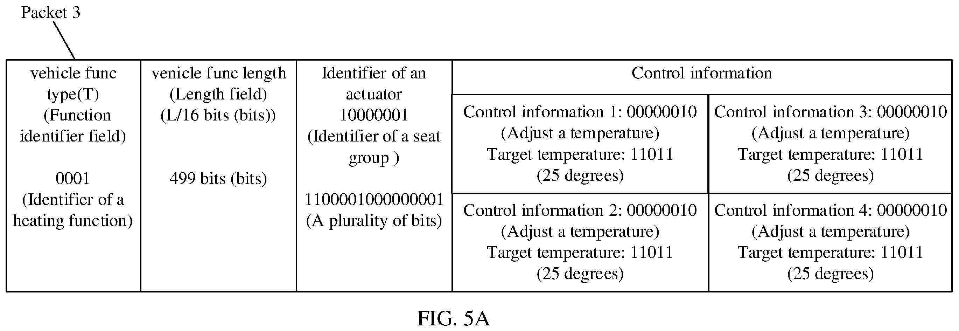

Example 1: Refer to FIG. 5A. In FIG. 5A, an object controlled by a packet 3 is an actuator, and a seat is used as an example of the actuator. The packet 3 is used to control heating functions of the number 1 seat, the number 2 seat, a number 7 seat, and a number 16 seat. A function identifier field of the packet 3 is an identifier (0001) of a heating function of a seat. An actuator identifier field in the packet 3 includes number identifiers (10000001) of number 1 to number 16 seats and 16 bits corresponding to the number 1 to number 16 seats, and only four valid bits (namely, bits identified as "1") are set in the 16 bits. A control information field of the packet 3 includes control information 1, control information 2, control information 3, and control information 4. To be specific, the control information 1 may be used to control a temperature of the number 1 seat to be adjusted to 25 degrees, the control information 2 may be used to control a temperature of the number 2 seat to be adjusted to 25 degrees, the control information 3 may be used to control a temperature of the number 7 seat to be adjusted to 25 degrees, and the control information 4 may be used to control a temperature of the number 16 seat to be adjusted to 25 degrees.

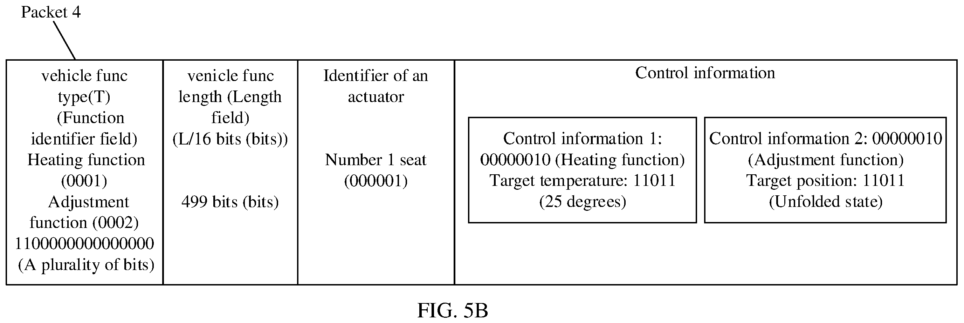

Example 2: Refer to FIG. 5B. In FIG. 5B, an object that needs to be controlled by a packet 4 is a function, and the packet 4 is used to control the heating function and the adjustment function of the number 1 seat in the vehicle. The function identifier field of the packet 3 includes the identifier (0001) of the heating function and the identifier (0002) of the adjustment function, and the 16 bits used to identify 16 functions of the seat. Only two valid bits (namely, bits identified as "1") are set in the 16 bits, and the two valid bits are respectively used to identify the adjustment function and the heating function of the seat. The actuator identifier field in the packet 4 includes the number identifier (000001) of the number 1 seat. The control information field in the packet 4 includes control information 1 and control information 2. To be specific, the control information 1 may be used to control a temperature of the number 1 seat to be adjusted to 25 degrees, and the control information 2 may control the number 1 seat to be adjusted to an unfolded state. It should be understood that the control information 2 may further include level control information of the adjustment function, for example, control information of adjusting the speed and control information of adjusting the direction. This is not specifically limited in this embodiment of this application.

In the foregoing embodiment, the controller sets, in the packet, the plurality of bits indicating whether the electronic control unit controls the plurality of objects based on the control information, and associates the plurality of bits with the plurality of objects in a one-to-one correspondence, so that the plurality of objects of the vehicle can be controlled, thereby effectively reducing information redundancy in the control packet of the vehicle, effectively reducing communication resource overheads, and effectively improving transmission efficiency of the control packet of the vehicle.

In some possible embodiments, the packet may further include a synchronization bit. In this case, the control information in the packet may be one piece of control information. That is, only one piece of control information needs to be set in the packet. In addition, the synchronization bit may indicate the electronic control unit to control the plurality of objects based on the one piece of control information. A value of the synchronization bit may be 0 or 1. When the value of the synchronization bit is 1, the electronic control unit can control the plurality of objects based on the one piece of control information. When the value of the synchronization bit is 0, the electronic control unit cannot control the plurality of objects based on the one piece of control information. In this way, a packet structure can be further optimized, and information redundancy in the packet can be reduced.

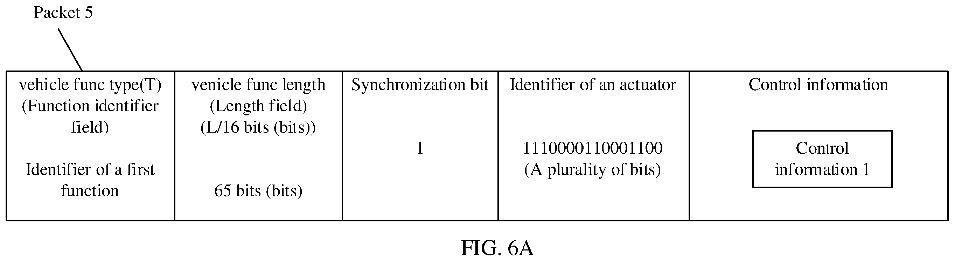

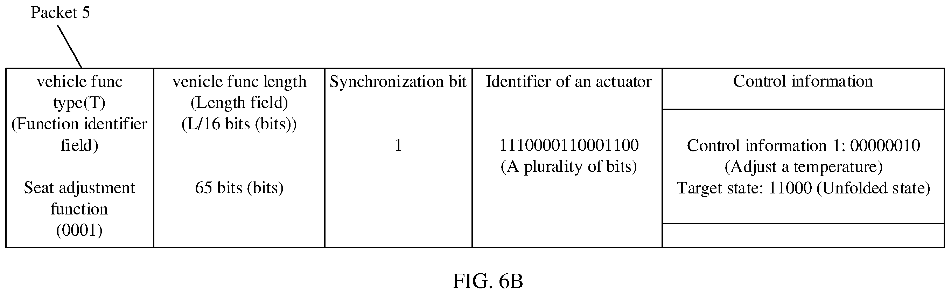

Example 1: Refer to FIG. 6A. An object controlled by a packet 5 shown in FIG. 6A is an actuator. A function identifier field in the packet 5 is an identifier of the first function. A length field is 65 bits. A value of a synchronization bit in the packet 5 is "1". An actuator identifier field in the packet 5 includes 16 bits, and the 16 bits include seven valid bits. The control information field includes control information 1. Therefore, the packet 5 may control, based on the control information 1, actuators corresponding to the seven valid bits to implement the first function. For example, as shown in FIG. 6B, a seat is used as an example of the actuator and an adjustment function is used as an example of the first function. After receiving the packet 5, the electronic control unit may control, based on the control information 1 in the packet 5, seven seats in the vehicle to implement the adjustment function.

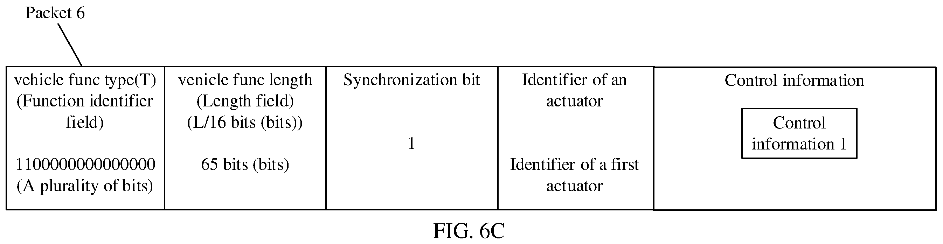

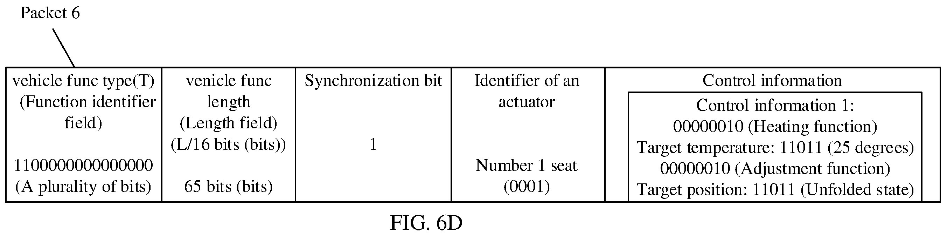

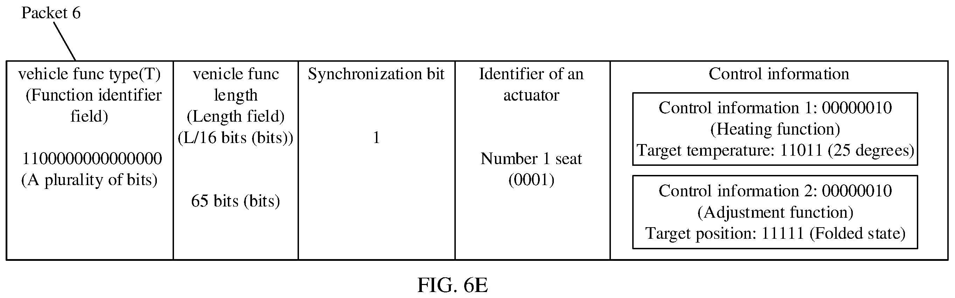

Example 2: Refer to a packet shown in FIG. 6C. An object controlled by a packet 6 shown in FIG. 6C is an actuator. A function identifier field in the packet 6 includes 16 bits, and the 16 bits include two valid bits. A length field in the packet 6 is 65 bits. A value of a synchronization bit in the packet 6 is "1". An actuator identifier field in the packet 6 is an identifier of the first actuator, and a control information field includes control information 1. Therefore, the packet 6 may control, based on the control information 1, actuators corresponding to the seven valid bits to implement the first function. For example, as shown in FIG. 6D, the number 1 seat is used an example of the first actuator, and an adjustment function and a heating function are used as an example of the function. After receiving the packet 6, the electronic control unit may control, based on the control information 1 in the packet 6, the number 1 seat to implement the adjustment function and the heating function. For another example, as shown in FIG. 6E, when the value of the synchronization bit is "0", control information corresponding to the heating function and the adjustment function is different, and the control information field of the packet carries control information 1 used to control the number 1 seat to reach a target temperature, and control information 2 used to control the number 1 seat to be adjusted to a folded state.

In this embodiment, the synchronization bit is set in the packet, so that the control packet of the vehicle only needs to carry one piece of control information, to control a plurality of actuators or functions. Data redundancy in the packet can be reduced, thereby greatly reducing data overheads.

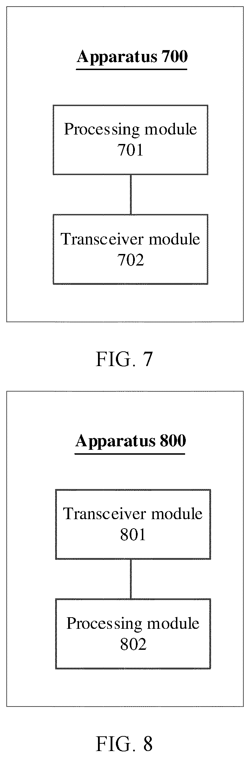

FIG. 7 is a possible schematic diagram of a structure of a control apparatus in the foregoing embodiment of this application. The apparatus 700 may be configured to implement a function performed by the controller in the embodiment shown in FIG. 3.

For example, the apparatus 700 may include a processing module 701 and a transceiver module 702.

The processing module 701 is configured to generate a packet. The packet includes a plurality of bits and control information. The plurality of bits indicate whether an electronic control unit in a vehicle controls a plurality of objects based on the control information. The plurality of bits are in a one-to-one correspondence with the plurality of objects. The object is an actuator or a function.

The transceiver module 702 is configured to send the packet to the electronic control unit.

In a possible design, the plurality of bits include at least one valid bit. The at least one valid bit indicates the electronic control unit to control at least one first object in the plurality of objects based on the control information. The at least one valid bit is in a one-to-one correspondence with the at least one first object.

In a possible design, the plurality of bits include at least one invalid bit. The at least one invalid bit indicates the electronic control unit not to control at least one second object in the plurality of objects based on the control information, and the at least one invalid bit is in a one-to-one correspondence with the at least one second object.

In a possible design, the packet further includes a synchronization bit. The control information is one piece of control information. The synchronization bit indicates the electronic control unit to control the plurality of objects based on the one piece of control information.

In a possible design, the packet further includes information indicating the plurality of objects.

In a possible design, the processing module 701 may determine the plurality of objects and the control information based on a user input.

In a possible design, the apparatus may be a chip or an integrated circuit.

In a possible design, the apparatus includes a memory and a processor. The memory is configured to store a program executed by the processor. When the program is executed by the processor, the apparatus may perform the method in any one of the first aspect or the possible designs of the first aspect.

In a possible design, the apparatus may be a controller in the vehicle. The controller may include at least one of the following: a vehicle body domain controller, a cockpit domain controller, an intelligent driving domain controller, and a vehicle control domain controller. Certainly, the controller may alternatively be a vehicle controller. This is not specifically limited in this embodiment of this application. In a possible design, the actuator includes at least one of the following: a door, a window, a light, a chassis actuator, an energy system component, and a sensor. It should be understood that, in this embodiment of this application, the actuator may further include another vehicle component or another vehicle-mounted device. This is not specifically limited in this embodiment of this application.

In a possible design, the function includes at least one of the following: a vehicle-mounted device control function, a vehicle body component control function, a charging control function, and a sensor control function. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle). It should be understood that the actuator in this embodiment of this application may further include another vehicle function. This is not specifically limited in this embodiment of this application.

FIG. 8 is a possible schematic diagram of a structure of another control apparatus in the foregoing embodiment of this application. The apparatus 800 may be configured to implement a function performed by the electronic control unit in the embodiment shown in FIG. 3.

For example, the apparatus 800 may include a transceiver module 801 and a processing module 802.

The transceiver module 801 is configured to receive a packet from a controller in a vehicle. The packet includes a plurality of bits and control information. The plurality of bits indicate whether an electronic control unit in a vehicle controls a plurality of objects based on the control information. The plurality of bits are in a one-to-one correspondence with the plurality of objects. The object is an actuator or a function.

The processing module 802 is configured to control the plurality of objects based on the packet.

In a possible design, the plurality of bits include at least one valid bit. The at least one valid bit indicates the electronic control unit to control at least one first object in the plurality of objects based on the control information. The at least one valid bit is in a one-to-one correspondence with the at least one first object. When configured to control the plurality of objects based on the packet, the processing module 801 is specifically configured to: control the at least one first object based on the control information.

In a possible design, the plurality of bits include at least one invalid bit. The at least one invalid bit indicates the electronic control unit not to control at least one second object in the plurality of objects based on the control information, and the at least one invalid bit is in a one-to-one correspondence with the at least one second object.

In a possible design, the packet further includes a synchronization bit. The control information is one piece of control information. The synchronization bit indicates the electronic control unit to control the plurality of objects based on the one piece of control information. When configured to control the plurality of objects based on the packet, the processing module 802 is specifically configured to: control the plurality of objects based on the one piece of control information.

In a possible design, the packet further includes information indicating the plurality of objects.

In a possible design, the controller includes at least one of the following: a vehicle body domain controller, a cockpit domain controller, an intelligent driving domain controller, and a vehicle control domain controller.

In a possible design, the actuator includes at least one of the following: a window, a light, a chassis actuator, an energy system component, and a sensor.

In a possible design, the function includes at least one of the following: a vehicle-mounted device control function, a vehicle body component control function, a charging control function, and a sensor control function. The vehicle-mounted device control function may be understood as a function of controlling the vehicle-mounted device (for example, a function of controlling a seat or a function of controlling a vehicle-mounted speaker). The vehicle body component control function may be understood as a function of controlling a body component (for example, controlling a door to open or controlling a light to turn on). The charging control function may be understood as controlling a related component (for example, an on-board charger (on-board charger, OBC) or a motor control unit (motor control unit, MCU)) of an energy system in the vehicle to implement a charging function. The sensor control function may be understood as a function of controlling a sensor (for example, controlling a camera or a lidar to collect environmental image information around the vehicle).

In a possible design, the apparatus may be a chip or an integrated circuit.

In a possible design, the apparatus includes a memory and a processor. The memory is configured to store a program executed by the processor. When the program is executed by the processor, the apparatus may perform the method in any one of the second aspect or the possible designs of the second aspect.

In a possible design, the apparatus may be the electronic control unit in the vehicle.

An embodiment of this application further provides a chip system. The chip system includes at least one processor. When program instructions are executed in the at least one processor, the control method in the embodiment shown in FIG. 3 is implemented.

In a possible design, the chip system further includes a communications interface, and the communications interface is configured to input or output information.

In a possible design, the chip system further includes a memory. The memory is coupled to a processor by using a communications interface, and is configured to store the foregoing instructions, so that the processor reads, through the communications interface, the instructions stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in the embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be noted that the memory described in this specification is intended to include but is not limited to these memories and any other suitable type of memory.

An embodiment of this application further provides a computer program product including instructions. When the computer program product runs on the foregoing apparatus, the control method in the embodiment shown in FIG. 3 is performed.

An embodiment of this application provides a computer-readable storage medium. The computer-readable storage medium stores a computer program. When the computer program is run, the control method in the embodiment shown in FIG. 3 is implemented.

The foregoing embodiments may be combined with each other to achieve different technical effects.

Based on descriptions of the foregoing implementations, a person skilled in the art may clearly understand that, for the purpose of convenient and brief description, division into the foregoing functional modules is merely used as an example for description. In actual application, the foregoing functions may be allocated to different functional modules for implementation according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes any medium that can store program code, such as a USB flash drive, a removable hard disk, a ROM, a RAM, a magnetic disk, or an optical disc. The foregoing descriptions are merely specific implementations of the embodiments of this application, but are not intended to limit the protection scope of the embodiments of this application. Any variation or replacement within the technical scope disclosed in this application shall fall within the protection scope of the embodiments of this application. Therefore, the protection scope of the embodiments of this application shall be subject to the protection scope of the claims.

## Claims

1. A control method, applied to a controller in a vehicle, wherein the vehicle comprises an electronic control unit, and the method comprises:
generating (S301), by the controller, a packet, wherein the packet comprises a plurality of bits and control information, the plurality of bits indicate whether the electronic control unit controls a plurality of objects based on the control information, and the plurality of bits are in a one-to-one correspondence with the plurality of objects; and
sending (S302), by the controller, the packet to the electronic control unit;
wherein the packet comprises a length field used to identify a bit length of the packet, a control information field comprising a plurality of pieces of control information, a function identifier field, and an actuator identifier field,
wherein the plurality of objects are actuators, the function identifier field corresponds to an identifier of a first function, each bit of the plurality of bits is used to identify one actuator, and each piece of control information corresponds to an actuator identified by a valid bit; or
wherein the plurality of objects are functions, each bit of the plurality of bits is used to identify one function, the actuator identifier field corresponds to an identifier of a first actuator, and each piece of control information corresponds to a function identified by a valid bit.

2. The method according to claim 1, wherein the plurality of bits comprise at least one valid bit, the at least one valid bit indicates the electronic control unit to control at least one first object in the plurality of objects based on the control information, and the at least one valid bit is in a one-to-one correspondence with the at least one first object.

3. The method according to claim 1 or 2, wherein the plurality of bits comprise at least one invalid bit, the at least one invalid bit indicates the electronic control unit not to control at least one second object in the plurality of objects based on the control information, and the at least one invalid bit is in a one-to-one correspondence with the at least one second object.

4. The method according to any one of claims 1 to 3, wherein the packet further comprises a synchronization bit, the control information is one piece of control information, and the synchronization bit indicates the electronic control unit to control the plurality of objects based on the one piece of control information.

5. The method according to any one of claims 1 to 4, wherein the packet further comprises information indicating the plurality of objects.

6. The method according to any one of claims 1 to 5, wherein the method further comprises:
determining, by the controller, the plurality of objects and the control information based on a user input.

7. The method according to any one of claims 1 to 6, wherein the controller comprises at least one of the following:
a vehicle body domain controller, a cockpit domain controller, an intelligent driving domain controller, a vehicle control domain controller, and a vehicle controller.

8. The method according to any one of claims 1 to 7, wherein the actuator comprises at least one of the following:
a window, a light, a chassis actuator, an energy system component, and a sensor.

9. The method according to any one of claims 1 to 8, wherein the function comprises at least one of the following:
a vehicle-mounted device control function, a vehicle body component control function, a charging control function, and a sensor control function.

10. A control method, applied to an electronic control unit in a vehicle, wherein the vehicle comprises a controller, and the method comprises:
receiving (S302), by the electronic control unit, a packet sent by the controller, wherein the packet comprises a plurality of bits and control information, the plurality of bits indicate whether the electronic control unit controls a plurality of objects based on the control information, and the plurality of bits are in a one-to-one correspondence with the plurality of objects; and
controlling (S303), by the electronic control unit, the plurality of objects based on the packet;
wherein the packet comprises a length field used to identify a bit length of the packet, a control information field comprising a plurality of pieces of control information, a function identifier field, and an actuator identifier field,
wherein the plurality of objects are actuators, the function identifier field corresponds to an identifier of a first function, each bit of the plurality of bits is used to identify one actuator, and each piece of control information corresponds to an actuator identified by a valid bit; or
wherein the plurality of objects are functions, each bit of the plurality of bits is used to identify one function, the actuator identifier field corresponds to an identifier of a first actuator, and each piece of control information corresponds to a function identified by a valid bit.

11. The method according to claim 10, wherein the plurality of bits comprise at least one valid bit, the at least one valid bit indicates the electronic control unit to control at least one first object in the plurality of objects based on the control information, and the at least one valid bit is in a one-to-one correspondence with the at least one first object; and
the controlling (S302), by the electronic control unit, the plurality of objects based on the packet comprises:
controlling, by the electronic control unit, the at least one first object based on the control information.

12. The method according to claim 10 or 11, wherein the plurality of bits comprise at least one invalid bit, the at least one invalid bit indicates the electronic control unit not to control at least one second object in the plurality of objects based on the control information, and the at least one invalid bit is in a one-to-one correspondence with the at least one second object.

13. The method according to any one of claims 10 to 12, wherein the packet further comprises a synchronization bit, the control information is one piece of control information, and the synchronization bit indicates the electronic control unit to control the plurality of objects based on the one piece of control information; and
the controlling (S203), by the electronic control unit, the plurality of objects based on the packet comprises:
controlling, by the electronic control unit, the plurality of objects based on the one piece of control information.

14. A controller (700) for a vehicle comprising an electronic control unit, wherein the controller (700) is configured to perform the steps in the method according to any one of claims 1 to 13.

15. A computer-readable storage medium, comprising a computer program, wherein when the computer program is executed by a processor, the method according to any one of claims 1 to 13 is performed.

## Patentansprüche

1. Steuerungsverfahren, angewendet auf einen Controller in einem Fahrzeug, wobei das Fahrzeug eine elektronische Steuerungseinheit umfasst, und das Verfahren umfasst:
Erzeugen (S301), durch den Controller, eines Pakets, wobei das Paket eine Vielzahl von Bits und Steuerungsinformationen umfasst, die Vielzahl von Bits angibt, ob die elektronische Steuerungseinheit eine Vielzahl von Objekten steuert, basierend auf den Steuerungsinformationen, und die Vielzahl von Bits in einer Eins-zu-Eins-Entsprechung mit der Vielzahl von Objekten steht; und
Senden (S302) des Pakets durch den Controller an die elektronische Steuerungseinheit;
wobei das Paket ein Längenfeld zum Identifizieren einer Bitlänge des Pakets, ein Steuerungsinformationsfeld, umfassend eine Vielzahl von Steuerungsinformationen, ein Funktionsidentifikatorfeld und ein Aktuatoridentifikatorfeld umfasst,
wobei es sich bei der Vielzahl von Objekten um Aktuatoren handelt, das Funktionsidentifikatorfeld einer Kennung einer ersten Funktion entspricht, jedes Bit der Vielzahl von Bits verwendet wird, um einen Aktuator zu identifizieren, und jede Steuerungsinformation einem durch ein gültiges Bit identifizierten Aktuator entspricht; oder
wobei es sich bei der Vielzahl von Objekten um Funktionen handelt, jedes Bit der Vielzahl von Bits verwendet wird, um eine Funktion zu identifizieren, das Aktuatoridentifikatorfeld einer Kennung eines ersten Aktuators entspricht und jede Steuerungsinformation einer durch ein gültiges Bit identifizierten Funktion entspricht.

2. Verfahren nach Anspruch 1, wobei die Vielzahl von Bits mindestens ein gültiges Bit umfasst, das mindestens eine gültige Bit der elektronischen Steuerungseinheit angibt, mindestens ein erstes Objekt aus der Vielzahl von Objekten zu steuern, basierend auf den Steuerungsinformationen, und das mindestens eine gültige Bit in einer Eins-zu-Eins-Entsprechung mit dem mindestens einen ersten Objekt steht.

3. Verfahren nach Anspruch 1 oder 2, wobei die Vielzahl von Bits mindestens ein ungültiges Bit umfasst, das mindestens eine ungültige Bit der elektronischen Steuerungseinheit angibt, mindestens ein zweites Objekt aus der Vielzahl von Objekten nicht zu steuern, basierend auf den Steuerungsinformationen, und das mindestens eine ungültige Bit in einer Eins-zu-Eins-Entsprechung mit dem mindestens einen zweiten Objekt steht.

4. Verfahren nach einem der Ansprüche 1 bis 3, wobei das Paket ferner ein Synchronisationsbit umfasst, die Steuerungsinformationen eine Steuerungsinformation sind, und das Synchronisationsbit der elektronischen Steuerungseinheit angibt, die Vielzahl von Objekten basierend auf der einen Steuerungsinformation zu steuern.

5. Verfahren nach einem der Ansprüche 1 bis 4, wobei das Paket ferner Informationen umfasst, die die Vielzahl von Objekten angeben.

6. Verfahren nach einem der Ansprüche 1 bis 5, wobei das Verfahren ferner Folgendes umfasst:
Bestimmen, durch den Controller, der Vielzahl von Objekten und der Steuerungsinformationen basierend auf einer Benutzereingabe.

7. Verfahren nach einem der Ansprüche 1 bis 6, wobei der Controller mindestens eines von dem Folgenden umfasst:
einen Fahrzeugkarosserie-Domänencontroller, einen Cockpit-Domänencontroller, einen Domänencontroller für intelligentes Fahren, einen Fahrzeugsteuerungsdomänencontroller und einen Fahrzeugcontroller.

8. Verfahren nach einem der Ansprüche 1 bis 7, wobei der Aktuator mindestens eines von dem Folgenden umfasst:
ein Fenster, ein Licht, einen Fahrgestellaktuator, eine Energiesystemkomponente und einen Sensor.

9. Verfahren nach einem der Ansprüche 1 bis 8, wobei die Funktion mindestens eines von dem Folgenden umfasst:
eine fahrzeugmontierte Vorrichtungssteuerungsfunktion, eine Fahrzeugkarosseriekomponenten-Steuerungsfunktion, eine Ladesteuerungsfunktion und eine Sensorsteuerungsfunktion.

10. Steuerungsverfahren, angewendet auf eine elektronische Steuerungseinheit in einem Fahrzeug, wobei das Fahrzeug einen Controller umfasst, und das Verfahren umfasst:
Empfangen (S302), durch die elektronische Steuerungseinheit, eines durch den Controller gesendeten Pakets, wobei das Paket eine Vielzahl von Bits und Steuerungsinformationen umfasst, die Vielzahl von Bits angibt, ob die elektronische Steuerungseinheit eine Vielzahl von Objekten steuert, basierend auf den Steuerungsinformationen, und die Vielzahl von Bits in einer Eins-zu-Eins-Entsprechung mit der Vielzahl von Objekten steht; und
Steuern (S303), durch die elektronische Steuerungseinheit, der Vielzahl von Objekten basierend auf dem Paket;
wobei das Paket ein Längenfeld zum Identifizieren einer Bitlänge des Pakets, ein Steuerungsinformationsfeld, umfassend eine Vielzahl von Steuerungsinformationen, ein Funktionsidentifikatorfeld und ein Aktuatoridentifikatorfeld umfasst,
wobei es sich bei der Vielzahl von Objekten um Aktuatoren handelt, das Funktionsidentifikatorfeld einer Kennung einer ersten Funktion entspricht, jedes Bit der Vielzahl von Bits verwendet wird, um einen Aktuator zu identifizieren, und jede Steuerungsinformation einem durch ein gültiges Bit identifizierten Aktuator entspricht; oder
wobei es sich bei der Vielzahl von Objekten um Funktionen handelt, jedes Bit der Vielzahl von Bits verwendet wird, um eine Funktion zu identifizieren, das Aktuatoridentifikatorfeld einer Kennung eines ersten Aktuators entspricht und jede Steuerungsinformation einer durch ein gültiges Bit identifizierten Funktion entspricht.

11. Verfahren nach Anspruch 10, wobei die Vielzahl von Bits mindestens ein gültiges Bit umfasst, das mindestens eine gültige Bit der elektronischen Steuerungseinheit angibt, mindestens ein erstes Objekt aus der Vielzahl von Objekten zu steuern, basierend auf den Steuerungsinformationen, und das mindestens eine gültige Bit in einer Eins-zu-Eins-Entsprechung mit dem mindestens einen ersten Objekt steht; und
das Steuern (S302), durch die elektronische Steuerungseinheit, der Vielzahl von Objekten basierend auf dem Paket Folgendes umfasst:
Steuern des mindestens einen ersten Objekts durch die elektronische Steuerungseinheit basierend auf den Steuerungsinformationen.

12. Verfahren nach Anspruch 10 oder 11, wobei die Vielzahl von Bits mindestens ein ungültiges Bit umfasst, das mindestens eine ungültige Bit der elektronischen Steuerungseinheit angibt, mindestens ein zweites Objekt aus der Vielzahl von Objekten nicht zu steuern, basierend auf den Steuerungsinformationen, und das mindestens eine ungültige Bit in einer Eins-zu-Eins-Entsprechung mit dem mindestens einen zweiten Objekt steht.

13. Verfahren nach einem der Ansprüche 10 bis 12, wobei das Paket ferner ein Synchronisationsbit umfasst, die Steuerungsinformationen eine Steuerungsinformation sind, und das Synchronisationsbit der elektronischen Steuerungseinheit angibt, die Vielzahl von Objekten basierend auf der einen Steuerungsinformation zu steuern; und
das Steuern (S203), durch die elektronische Steuerungseinheit, der Vielzahl von Objekten basierend auf dem Paket Folgendes umfasst:
Steuern, durch die elektronische Steuerungseinheit, der Vielzahl von Objekten basierend auf der einen Steuerungsinformation.

14. Controller (700) für ein Fahrzeug, umfassend eine elektronische Steuerungseinheit, wobei der Controller (700) dazu konfiguriert ist, die Schritte des Verfahrens nach einem der Ansprüche 1 bis 13 durchzuführen.

15. Computerlesbares Speichermedium, umfassend ein Computerprogramm, wobei, wenn das Computerprogramm durch einen Prozessor ausgeführt wird, das Verfahren nach einem der Ansprüche 1 bis 13 durchgeführt wird.

## Revendications

1. Procédé de commande, appliqué à un dispositif de commande dans un véhicule, dans lequel le véhicule comprend une unité de commande électronique, et le procédé comprend :
la génération (S301), par le dispositif de commande, d'un paquet, dans lequel le paquet comprend une pluralité de bits et d'informations de commande, la pluralité de bits indiquent si l'unité de commande électronique commande une pluralité d'objets en fonction des informations de commande, et la pluralité de bits sont en correspondance biunivoque avec la pluralité d'objets ; et
l'envoi (S302), par le dispositif de commande, du paquet à l'unité de commande électronique ;
dans lequel le paquet comprend un champ de longueur utilisé pour identifier une longueur en bits du paquet, un champ d'informations de commande comprenant une pluralité d'éléments d'informations de commande, un champ d'identifiant de fonction et un champ d'identifiant d'actionneur,
dans lequel la pluralité d'objets sont des actionneurs, le champ d'identifiant de fonction correspond à un identifiant d'une première fonction, chaque bit de la pluralité de bits est utilisé pour identifier un actionneur, et chaque élément d'informations de commande correspond à un actionneur identifié par un bit valide ; ou
dans lequel la pluralité d'objets sont des fonctions, chaque bit de la pluralité de bits est utilisé pour identifier une fonction, le champ d'identifiant d'actionneur correspond à un identifiant d'un premier actionneur, et chaque élément d'informations de commande correspond à une fonction identifiée par un bit valide.

2. Procédé selon la revendication 1, dans lequel la pluralité de bits comprend au moins un bit valide, l'au moins un bit valide indique à l'unité de commande électronique de commander au moins un premier objet parmi la pluralité d'objets en fonction des informations de commande, et l'au moins un bit valide est en correspondance biunivoque avec l'au moins un premier objet.

3. Procédé selon la revendication 1 ou 2, dans lequel la pluralité de bits comprend au moins un bit invalide, l'au moins un bit invalide indique à l'unité de commande électronique de ne pas commander au moins un second objet parmi la pluralité d'objets en fonction des informations de commande, et l'au moins un bit invalide est en correspondance biunivoque avec l'au moins un second objet.

4. Procédé selon l'une quelconque des revendications 1 à 3, dans lequel le paquet comprend en outre un bit de synchronisation, les informations de commande constituent un élément d'informations de commande, et le bit de synchronisation indique à l'unité de commande électronique de commander la pluralité d'objets en fonction de l'élément d'informations de commande.

5. Procédé selon l'une quelconque des revendications 1 à 4, dans lequel le paquet comprend en outre des informations indiquant la pluralité d'objets.

6. Procédé selon l'une quelconque des revendications 1 à 5, dans lequel le procédé comprend en outre :
la détermination, par le dispositif de commande, de la pluralité d'objets et des informations de commande en fonction d'une entrée d'utilisateur.

7. Procédé selon l'une quelconque des revendications 1 à 6, dans lequel le dispositif de commande comprend au moins l'un des éléments suivants :
un dispositif de commande de domaine de carrosserie de véhicule, un dispositif de commande de domaine de poste de pilotage, un dispositif de commande de domaine de conduite intelligente, un dispositif de commande de domaine de commande de véhicule et un dispositif de commande de véhicule.

8. Procédé selon l'une quelconque des revendications 1 à 7, dans lequel l'actionneur comprend au moins l'un des éléments suivants :
une fenêtre, une lumière, un actionneur de châssis, un composant de système énergétique et un capteur.

9. Procédé selon l'une quelconque des revendications 1 à 8, dans lequel la fonction comprend au moins l'un des éléments suivants :
une fonction de commande de dispositif monté sur véhicule, une fonction de commande de composant de carrosserie de véhicule, une fonction de commande de charge et une fonction de commande de capteur.

10. Procédé de commande, appliqué à une unité de commande électronique dans un véhicule, dans lequel le véhicule comprend un dispositif de commande, et le procédé comprend :
la réception (S302), par l'unité de commande électronique, d'un paquet envoyé par le dispositif de commande, dans lequel le paquet comprend une pluralité de bits et d'informations de commande, la pluralité de bits indiquent si l'unité de commande électronique commande une pluralité d'objets en fonction des informations de commande, et la pluralité de bits sont en correspondance biunivoque avec la pluralité d'objets ; et
la commande (S303), par l'unité de commande électronique, de la pluralité d'objets en fonction du paquet ;
dans lequel le paquet comprend un champ de longueur utilisé pour identifier une longueur en bits du paquet, un champ d'informations de commande comprenant une pluralité d'éléments d'informations de commande, un champ d'identifiant de fonction et un champ d'identifiant d'actionneur,
dans lequel la pluralité d'objets sont des actionneurs, le champ d'identifiant de fonction correspond à un identifiant d'une première fonction, chaque bit de la pluralité de bits est utilisé pour identifier un actionneur, et chaque élément d'informations de commande correspond à un actionneur identifié par un bit valide ; ou
dans lequel la pluralité d'objets sont des fonctions, chaque bit de la pluralité de bits est utilisé pour identifier une fonction, le champ d'identifiant d'actionneur correspond à un identifiant d'un premier actionneur, et chaque élément d'informations de commande correspond à une fonction identifiée par un bit valide.

11. Procédé selon la revendication 10, dans lequel la pluralité de bits comprend au moins un bit valide, l'au moins un bit valide indique à l'unité de commande électronique de commander au moins un premier objet parmi la pluralité d'objets en fonction des informations de commande, et l'au moins un bit valide est en correspondance biunivoque avec l'au moins un premier objet ; et la commande (S302), par l'unité de commande électronique, de la pluralité d'objets en fonction du paquet comprend :
la commande, par l'unité de commande électronique, de l'au moins un premier objet en fonction des informations de commande.

12. Procédé selon la revendication 10 ou 11, dans lequel la pluralité de bits comprend au moins un bit invalide, l'au moins un bit invalide indique à l'unité de commande électronique de ne pas commander au moins un second objet parmi la pluralité d'objets en fonction des informations de commande, et l'au moins un bit invalide est en correspondance biunivoque avec l'au moins un second objet.

13. Procédé selon l'une quelconque des revendications 10 à 12, dans lequel le paquet comprend en outre un bit de synchronisation, les informations de commande constituent un élément d'informations de commande, et le bit de synchronisation indique à l'unité de commande électronique de commander la pluralité d'objets en fonction de l'élément d'informations de commande ; et
la commande (S203), par l'unité de commande électronique, de la pluralité d'objets en fonction du paquet comprend :
la commande, par l'unité de commande électronique, de la pluralité d'objets en fonction de l'élément d'informations de commande.

14. Dispositif de commande (700) pour un véhicule comprenant une unité de commande électronique, dans lequel le dispositif de commande (700) est configuré pour réaliser les étapes du procédé selon l'une quelconque des revendications 1 à 13.

15. Support de stockage lisible par ordinateur, comprenant un programme informatique, dans lequel lorsque le programme informatique est exécuté par un processeur, le procédé selon l'une quelconque des revendications 1 à 13 est réalisé.
